# EUROPÄISCHE PATENTSCHRIFT

(11) **EP 1 731 254 B1**
(45) Veröffentlichungstag und Bekanntmachung des Hinweises auf die Patenterteilung: **20.08.2008**
(21) Anmeldenummer: 06011461.8
(22) Anmeldetag: 02.06.2006
(51) Int. Cl.: B23K 20/12, F01D 5/00, F01D 5/30, B23P 6/00, B23P 15/04, B23K 101/00

(54) **Verfahren zum oszillierenden Reibschweissen von Bauteilen mit einer umlaufenden Nut in mindestens einem der beiden Bauteile in der Nähe der Fügezone**
Method of oscillating friction welding of workpieces with a closed groove on at leat one of the workpieces located near the welding zone
Méthode de soudage par friction oscillant de pièces avec une rainure fermée sur au moins l'une pièce localisée au voisnage de la zone d'assemblage

(30) Priorität: 09.06.2005 DE 102005026497
(43) Veröffentlichungstag der Anmeldung: 13.12.2006
(73) Patentinhaber: MTU Aero Engines GmbH, 80995 München (DE)
(72) Erfinder: Bamberg, Joachim, Dr., 85221 Dachau (DE)

(56) Entgegenhaltungen:
- US-A- 5 495 977
- US-A1- 2003 168 494
- US-A1- 2003 197 049
- US-A1- 2005 124 432

## Beschreibung

Die Erfindung betrifft ein Verfahren zum Fügen von Bauteilen mit geometrisch gleichen Fügeflächen sowie mit zu den Fügeflächen hin zumindest annähernd konstanten, den Fügeflächen geometrisch entsprechenden Bauteilquerschnitten, gemäß dem Oberbegriff des Patentanspruchs 1. (siehe, z.B., US 2003/168494)

Bei der Fertigung von Gasturbinen ist das Reibschweißen ein weitverbreitetes Fügeverfahren. Das Reibschweißen gehört zu den sogenannten Pressschweißverfahren. Beim Reibschweißen werden Bauteile durch Reibung aneinander gefügt bzw. miteinander verbunden. Beim linearen Reibschweißen wird ein Bauteil translatorisch hin- und herbewegt, wohingegen das andere Bauteil stillsteht und mit einer bestimmten Kraft gegen das bewegte Bauteil gedrückt wird. Hierbei passen sich Fügeflächen der miteinander zu verbindenden Bauteile durch Warmverschmieden aneinander an. Das lineare Reibschweißen zählt man zu den sogenannten oszillierenden Reibschweißverfahren. Weitere Reibschweißverfahren sind das sogenannte Rotationsreibschweißen und das sogenannte Rührreibschweißen.

Bei der aus dem Stand der Technik bekannten Vorgehensweise zum Verbinden bzw. Fügen von Bauteilen über oszillierendes Reibschweißen, nämlich über lineares Reibschweißen, werden zwei miteinander zu verbindende Bauteile aneinander gerieben, wobei ein Bauteil translatorisch hin- und herbewegt wird und vorzugsweise über das andere Bauteil ein definierter Stauchdruck auf die Fügeflächen der beiden Bauteilen ausgeübt wird. Diesbezüglich kann zum Beispiel auf die US 6,219,916 und auf die US 6,095,402 verwiesen werden. Bei der Reibbewegung der miteinander zu verbindenden Bauteile entstehen im Bereich einer Randzone der Fügeflächen freie Abschnitte, die einer möglichen Kontaminierung ausgesetzt sind. Erfolgt das lineare Reibschweißen unter Normalatmosphäre so sind diese freien Abschnitte einer Kontamination durch Sauerstoff ausgesetzt, wodurch Sprödphasen in die Fügezone zwischen den miteinander zu verbindenden Bauteilen eingebracht werden können, welche die Festigkeit der Verbindung beeinträchtigen. Zur Vermeidung von Kontaminierungen durch Sauerstoff ist es aus dem Stand der Technik bekannt, das lineare Reibschweißen unter einer Schutzgasatmosphäre, z.B. unter einer Argonatmosphäre, durchzuführen. Es hat sich jedoch gezeigt, dass auch beim linearen Reibschweißen unter einer Argonatmosphäre Kontaminierungen der Fügezone auftreten können, nämlich dadurch, dass sich mit Argon gefüllte Schlauchporen ausbilden. Die mit Argon gefüllten Schlauchporen bleiben auch bei Aufbringen des Stauchdrucks erhalten, was sich negativ auf die sogenannte Schwingfestigkeit der durch lineares Reibschweißen hergestellten Fügezone auswirken kann.

Das Dokument US 2003/168494 A1 betrifft ein Verfahren zur Fertigung von Halbfertigteilen mittels Reibschweißen. Dabei sollen T-förmige oder kreuzförmige Teile entstehen, welche spanabhebend fertiggestellt werden. Ausgehend von geometrisch einfachen, z.B. rechteckigen Elementen mit ausreichend Übermaß wird beispielsweise ein Element hochkant auf einem flach liegenden Element positioniert und mittels vertikalem Druck und horizontaler oszillierender Bewegung mit dem liegenden Element verschweißt. Problematisch dabei ist, dass die untere Auflagefläche des hochkant stehenden Elements erheblich kleiner ist, als die Oberfläche des liegenden Elements, wodurch in der Fügefläche ein extremer Querschnittssprung gegeben ist. Bezüglich des Reibschweißens hat dies u.a. den Nachteil, dass das aus der Fügezone verdrängte Material, d.h. der Schweißwulst (flash 10) nicht optimal frei austreten kann. Zur Abhilfe ist gemäß Fig. 10 bis 12 vorgesehen, in vertikaler Verlängerung der Seitenflächen des hochkant stehenden Elements zwei parallele Nuten (grooves 7) in die Oberfläche des liegenden Elements einzubringen. Diese bieten den Schweißwülsten (10) Platz für einen weitgehend freien Austritt. Siehe Absatz [0039] auf Seite 4, linke Spalte.

Das Dokument US 2003/197049 A1 betrifft eine spezielle Schutzgasführung mit diametraler Zufuhr bei der Fertigung von integral beschaufelten Rotoren durch Reibschweißen.

Hiervon ausgehend liegt der vorliegenden Erfindung das Problem zu Grunde, ein neuartiges Verfahren zum Fügen von im Fügebereich - ohne Querschnittssprung - fluchtenden Bauteilen durch Reibschweißen zu schaffen.

Dieses Problem wird durch ein Verfahren zum Fügen von Bauteilen gemäß Patentanspruch 1 gelöst.

Im Sinne der hier vorliegenden Erfindung wird vorgeschlagen, in mindestens eines der miteinander zu verbindenden bzw. aneinander zu fügenden Bauteile mindestens eine umlaufende Nut einzubringen, die benachbart zur jeweiligen Fügefläche des Bauteils positioniert ist und den Bauteilquerschnitt senkrecht zur Fügefläche reduziert. Durch das Einbringen mindestens einer solchen umlaufenden Nut in mindestens eines der miteinander zu verbindenden Bauteile wird eine Elastizität im Randbereich der Fügeflächen etabliert, die eine mechanische Entlastung des Randbereichs der Fügeflächen beim linearen Reibschweißen gewährleistet. Hierdurch können Normalspannungen sowie Scherspannungen im Randbereich der Fügeflächen reduziert werden, wodurch gewährleistet wird, dass sich die Fügeflächen beim linearen Reibschweißen gleichmäßiger Erwärmen. Die Entstehung von mit Argon gefüllten Schlauchporen im Randbereich der Fügefläche kann auf diese Art und Weise effektiv unterbunden werden. Durch das Einbringen mindestens einer umlaufenden Nut in mindestens eines der miteinander zu verbindenden Bauteile wird sozusagen eine elastisch weiche Dichtlippe realisiert, die das Entstehen von mit Argon gefüllten Schlauchporen in den Randabschnitten der Fügeflächen bzw. der Fügezone verhindert. Hierdurch kannn die Schwingfestigkeit der Fügezone verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

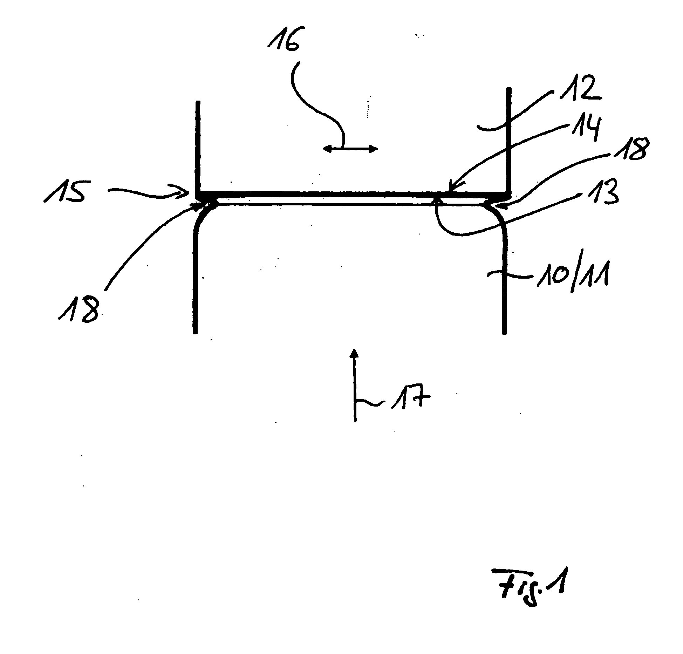

- Fig. 1: einen Ausschnitt aus zwei im Sinne des erfindungsgemäßen Verfahrens miteinander zu verbindenden Bauteilen.

Nachfolgend wird die Erfindung unter Bezugnahme auf Fig. 1 in größerem Detail beschrieben.

Fig. 1 verdeutlicht das erfindungsgemäße Verfahren zum Fügen von Bauteilen am Beispiel der Herstellung bzw. Reparatur eines integral geschaufelten Gasturbinenrotors, wobei gemäß Fig. 1 an einen Schaufelhöcker 10 eines Rotorgrundkörpers 11 ein Schaufelblatt 12 einer Laufschaufel zu fügen ist. Das Fügen des Schaufelblatts 12 an den Schaufelhöcker 10 des Rotorgrundkörpers 11 erfolgt im Sinne der hier vorliegenden Erfindung durch oszillierendes Reibschweißen, insbesondere durch lineares Reibschweißen, wobei hierbei der Schaufelhöcker 10 und das Schaufelblatt 12 im Bereich von Fügeflächen 13 und 14 derselben unter Ausbildung einer Fügezone 15 miteinander verbunden werden. Nach dem Ausrichten der beiden miteinander zu verbindenden Bauteile, nämlich des Schaufelblatts 12 relativ zum Schaufelhöcker 10 im Bereich ihrer Fügeflächen 13 und 14, erfolgt das Verbinden der beiden Bauteile durch oszillierendes Reibschweißen, nämlich durch lineares Reibschweißen, wobei hierzu vorzugsweise das Schaufelblatt 12 im Sinne des Doppelpfeils 16 translatorisch hin- und herbewegt wird, wohingegen der Schaufelhöcker 10 stillsteht und nach Erreichen einer ausreichenden Erwärmung der Fügeflächen 13 und 14 von Schaufelblatt 12 und Schaufelhöcker 10 im Sinne des Pfeils 17 mit einer bestimmten Kraft gegen das bewegte Schaufelblatt 12 gedrückt wird. Selbstverständlich kann diese Stauchkraft auch über das Schaufelblatt 12 aufgebracht werden. Das oszillierende Reibschweißen erfolgt unter einer Schutzgasatmosphäre, vorzugsweise unter einer sogenannten Argon-Dusche.

Beim konventionellen oszillierenden bzw. linearen Reibschweißen unter einer Argonatmosphäre besteht das Problem, dass sich beim translatorischen Hin- und Herbewegen des Schaufelblatts 12 relativ zum Schaufelhöcker 10 an Randbereichen der Fügeflächen 13 und 14 freie Abschnitte ausbilden, in welchen sich mit Argon gefüllte Schlauchporen ausbilden können. Derartige mit Argon gefüllte Schlauchporen bleiben auch bei Aufbringen eines hohen Stauchdrucks erhalten und beeinträchtigen die Schwingfestigkeit der durch oszillierendes Reibschweißen hergestellten Fügezone 15. Zur Vermeidung dieser Problematik wird im Sinne der hier vorliegenden Erfindung vorgeschlagen, in mindestens eines der miteinander zu verbindenden Bauteile mindestens eine umlaufende Nut einzubringen.

Im Ausführungsbeispiel der Fig. 1 ist in den Schaufelhöcker 10 des Rotorgrundkörpers 11 eine umlaufende Nut 18 eingebracht, und zwar benachbart zur Fügefläche 13 des Schaufelhöckers 10. Hierdurch wird eine elastisch weiche Dichtlippe im Randbereich der Fügefläche 13 bereitgestellt, welche für eine mechanische Entlastung des Randbereichs der Fügeflächen 13 und 14 durch Verminderung der Normalspannungen sowie Scherspannungen im Randbereich der Fügezone 15 bzw. im Randbereich der Fügeflächen 13 und 14 sorgt. Die Ausbildung von mit Argon gefüllten Schlauchporen im Randbereich der Fügezone 15, nämlich an den sich beim translatorischen Hin- und Herbewegen ausbildenden freien Abschnitten der Fügeflächen 13 und 14, kann so effektiv unterbunden werden. Hierdurch ist es möglich, beim oszillierenden bzw. linearen Reibschweißen Fügezonen mit einer optimierten Festigkeit, insbesondere einer optimierten Schwingfestigkeit, bereitzustellen.

Im gezeigten Ausführungsbeispiel der Fig. 1 ist lediglich in den Schaufelhöcker 10 eine umlaufende Nut 18 benachbart zur Fügefläche 13 desselben eingebracht. An dieser Stelle sei darauf hingewiesen, dass im Sinne der hier vorliegenden Erfindung in den Schaufelhöcker 10 auch mehrere Nuten 18 mit zunehmendem Abstand von der Fügefläche 13 desselben eingebracht werden können. Nach einer weiteren Ausgestaltung der hier vorliegenden Erfindung kann sowohl in den Schaufelhöcker 10 als auch in das Schaufelblatt 12 jeweils mindestens eine derartige, umlaufende Nut eingebracht werden, die jeweils wiederum benachbart zu den jeweiligen Fügeflächen 13 und 14 positioniert sind. Auch ist es möglich, lediglich in das Schaufelblatt 12 benachbart zur Fügefläche 14 derselben mindestens eine derartige umlaufende Nut einzubringen.

## Patentansprüche

1. Verfahren zum Fügen von Bauteilen (11, 12) mit geometrisch gleichen Fügeflächen (13, 14) sowie mit zu den Fügeflächen (13, 14) hin zumindest annähernd konstanten, den Fügeflächen (13, 14) geometrisch entsprechenden Bauteilquerschnitten, insbesondere zum Fügen eines Schaufelblatts (12) einer Laufschaufel an einen Rotorgrundkörper (11) bei der Herstellung und/oder Reparatur eines integral beschaufelten Gasturbinenrotors, wobei zwei miteinander zu verbindende bzw. aneinander zu fügende Bauteile (11, 12) bereitgestellt werden und jedes der Bauteile (11, 12) eine Fügefläche (13, 14) aufweist, an welchen die Bauteile (11, 12) unter Ausbildung einer Fügezone (15) zu verbinden sind und wobei die beiden miteinander zu verbindenden Bauteile (11, 12) an ihren Fügeflächen (13, 14) ausgerichtet und durch oszillierendes Reibschweißen, insbesondere durch lineares Reibschweißen, verbunden werden,
**dadurch gekennzeichnet,**
**dass** vor dem Fügen in mindestens eines der zu fügenden Bauteile (11, 12) benachbart zu dessen Fügefläche (13, 14) mindestens eine umlaufende, den Bauteilquerschnitt senkrecht zur Fügefläche (13, 14) reduzierende Nut (18) eingebracht wird.

2. Verfahren nach Anspruch 1,
**dadurch gekennzeichnet,**
**dass** in jedes der beiden miteinander zu verbindenden bzw. aneinander zu fügenden Bauteile (11,12) eine umlaufende Nut (18) benachbart zur jeweiligen Fügefläche des Bauteils eingebracht wird.

3. Verfahren nach Anspruch 1,
**dadurch gekennzeichnet,**
**dass** in ausschließlich eines der beiden miteinander zu verbindenden bzw. aneinander zu fügenden Bauteile (11) eine umlaufende Nut (18) benachbart zur Fügefläche (13) des Bauteils (11) eingebracht wird.

4. Verfahren nach Anspruch 3,
**dadurch gekennzeichnet,**
**dass** bei der Herstellung und/oder Reparatur eines integral beschaufelten Gasturbinenrotors die Nut (18) in einen Schaufelhöcker (10) des Rotorgrundkörpers (11) eingebracht wird.

5. Verfahren nach einem der Ansprüche 1 bis 4,
**dadurch gekennzeichnet,**
**dass** das oszillierende Reibschweißen, insbesondere das lineare Reibschweißen, unter Schutzgasatmosphäre durchgeführt wird.

## Claims

1. Method for the joining of components (11, 12) with geometrically matched joint surfaces (13, 14) and with component cross-sections that are at least approximately constant towards the joint surfaces (13, 14) and which correspond to the said joint surfaces (13, 14), in particular for the joining of a blade portion (12) of a rotor blade onto a basic rotor body (11) during the production and/or repair of an integrally bladed gas turbine rotor, such that two components (11, 12) to be connected together or joined to one another are prepared and each of the components (11, 12) has a respective joint surface (13, 14) over which the components (11, 12) are to be joined with the formation of a joint zone (15), and such that the two components (11, 12) to be connected to one another are fitted together on their joint surfaces (13, 14) and are joined by oscillating friction welding, in particular by linear friction welding,
**characterised in that**
before the joining process at least one circumferential groove (18) which reduces the component cross-section perpendicularly to the joint surface (13, 14) is formed close to the said joint surface (13, 14) in at least one of the components (11, 12).

2. Method according to Claim 1,
**characterised in that**
a circumferential groove (18) is formed close to the respective joint surface of the component in each of the two components (11, 12) to be connected together or joined to one another.

3. Method according to Claim 1,
**characterised in that**
a circumferential groove (18) is formed exclusively in one (11) of the two components to be connected together or joined to one another, close to the joint surface (13) of the said component (11).

4. Method according to Claim 3,
**characterised in that**
for the production and/or repair of an integrally bladed gas turbine rotor, the groove (18) is formed in a blade post (10) of the basic rotor body (11).

5. Method according to any of Claims 1 to 4,
**characterised in that**
the oscillating friction welding, in particular the linear friction welding, is carried out under a protective gas atmosphere.

## Revendications

1. Procédé pour l'assemblage de pièces (11, 12) avec des surfaces d'assemblage (13, 14) géométriquement identiques, et avec des sections au moins sensiblement constantes vers les surfaces d'assemblage (13, 14) et correspondant géométriquement aux surfaces d'assemblage (13, 14), en particulier pour l'assemblage d'une pale (12) d'une aube mobile sur un corps de rotor (11) lors de la fabrication et/ou de la réparation d'un rotor de turbine à gaz à aubage intégral, deux pièces (11, 12) à relier ou à assembler l'une à l'autre étant mises à disposition et chacune des pièces (11, 12) étant à assembler moyennant la réalisation d'une zone d'assemblage (15), et les deux pièces (11, 12) à assembler l'une à l'autre étant alignées au niveau de leurs surfaces d'assemblage (13, 14) et étant assemblées par un soudage par friction oscillant, en particulier par un soudage par friction linéaire, **caractérisé en ce que**, avant l'assemblage, au moins une rainure (18) périphérique, diminuant la section de la pièce perpendiculairement à la surface d'assemblage (13, 14), est ménagée dans au moins une des pièces (11, 12) à assembler, à proximité de la surface d'assemblage (13, 14) de celle-ci.

2. Procédé selon la revendication 1, **caractérisé en ce qu'**une rainure (18) périphérique est ménagée dans chacune des deux pièces (11, 12) à relier ou à assembler l'une à l'autre, à proximité de la surface d'assemblage respective de la pièce.

3. Procédé selon la revendication 1, **caractérisé en ce qu'**une rainure (18) périphérique est ménagée exclusivement dans l'une des deux pièces (11) à relier ou à assembler l'une à l'autre, à proximité de la surface d'assemblage (13) de la pièce (11).

4. Procédé selon la revendication 3, **caractérisé en ce que**, lors de la fabrication et/ou de la réparation d'un rotor de turbine à gaz à aubage intégral, la rainure (18) est ménagée dans une bosse (10) de la pale du corps de rotor (11).

5. Procédé selon l'une quelconque des revendications 1 à 4, **caractérisé en ce que** le soudage par friction oscillant, en particulier le soudage par friction linéaire, est mis en oeuvre sous atmosphère de gaz protecteur.
